# EUROPEAN PATENT APPLICATION

(11) **EP 1 882 711 A1**
(43) Date of publication of application: **30.01.2008**
(21) Application number: 06732554.8
(22) Date of filing: 12.05.2006
(51) Int. Cl.: C08G 18/42, C08G 18/10, C09D 175/04, C09J 175/04, C09K 3/10

(54) **HARDENABLE COMPOSITION**

(30) Priority: 16.05.2005 JP 2005142751
(71) Applicant: Asahi Glass Company, Limited, Chiyoda-ku, Tokyo 100-8405 (JP)
(72) Inventor: TSUGE, Yukio c/o Asahi Glass Urethane Co., Ltd., Ibaraki 3140195 (JP); WADA, Hiroshi c/o Asahi Glass Urethane Co., Ltd., Ibaraki 3140195 (JP); HAMASAKI, Kota c/o Asahi Glass Urethane Co., Ltd., Ibaraki 3140195 (JP)
(74) Representative: Hartz, Nikolai
(86) International application number: PCT/JP2006/309573
(87) International publication number: WO 2006/123586

(57) **Abstract**

A curable composition is provided which is excellent in adhesion to a substrate and mechanical strength and which has a low viscosity and thus is excellent in workability even without incorporating a solvent or a plasticizer.

A one-component moisture curing type curable composition comprising an isocyanate group-terminated prepolymer obtainable by reacting a high molecular weight polyol having a hydroxyl value of from 10 to 300 mgKOH/g with a polyisocyanate compound, wherein at least a part of the high molecular weight polyol is a polyester ether polyol obtainable by ring-opening polymerization of a mixture of an alkylene oxide and a lactone monomer in the presence of an initiator.

## Description

### TECHNICAL FIELD

The present invention relates to a curable composition which is excellent in adhesion to a substrate and mechanical strength and which has a low viscosity and thus is excellent in workability even without incorporating a solvent or a plasticizer.

### BACKGROUND ART

Polyurethane resins are widely used for adhesives, coating materials, sealing materials, floor materials, resilient paving materials, water-proofing materials, etc. by virtue of their excellent adhesive properties and flexibility.

In such applications, a one-component moisture curing type curable composition which contains an isocyanate group-terminated prepolymer obtainable by reacting a polyol with an isocyanate compound and which is curable by a reaction with moisture in air or in a substrate to be bonded, and a two-component curing type curable composition which comprises a base material component consisting of an isocyanate group-terminated prepolymer, and a curing agent component such as a polyol or a hydroxyl group-terminated prepolymer obtainable by reacting a polyol with a polyisocyanate compound, are known. Further, it is known to use a polyoxyalkylene polyol or a polyester polyol as the starting material polyol.

In a case where a polyoxyalkylene polyol is used as the starting material polyol, the polyoxyalkylene polyol is liquid at normal temperature and thus has a merit such that even when formed into a prepolymer, the workability is good as the viscosity is low. However, when it is used for a building material, an automobile component, an adhesive for a food packaging film, or a water-proofing material, the adhesive properties have sometimes been inadequate depending upon the type of a substrate to be bonded. For example, the adhesive properties have been inadequate to a polyvinyl chloride sheet or an aluminum sheet to be used for a floor material or wallpaper.

On the other hand, in a case where a polyester polyol is used as the starting material polyol, the adhesive properties to a polyvinyl chloride sheet or an aluminum sheet may be excellent, but the viscosity of the polyester polyol is high, whereby when formed into a prepolymer, the viscosity further increases, and it has been required to use a solvent or a plasticizer in combination. In recent years, along with an increasing concern about environmental problems, there has been a movement to discourage use of organic solvents in building or residential areas. Therefore, it is desired to develop a polyol which has a low viscosity and which is excellent in physical properties such as adhesive properties when formed into an adhesive, as a starting material polyol to be used for an adhesive or water-proofing material.

For the purpose of solving the above problems, a method has been proposed wherein a polyether polyol having a low viscosity and a polyester polyol having excellent adhesive properties are used in combination. However, the compatibility of the polyether polyol and the polyester polyol is poor, and there has been a problem of phase separation into two layers. Further, the reactivities of the polyols are different, and a cumbersome process has been required such that the reactions with polyisocyanate compounds are carried out in two steps to obtain a prepolymer. Further, a method has also been proposed wherein a prepolymer made of a polyester polyol and a prepolymer made of a polyoxyalkylene polyol are used in combination, but there has been a problem that the compatibility is poor, thus leading to phase separation.

Further, a method has also been proposed wherein a polyester ether polyol having an alkylene oxide added to a polyester polyol, is used as an adhesive. However, a polymer comprising block copolymer chains of polyester chains and polyether chains, is used, and it has tended to agglomerate and has been inadequate in making the viscosity to be low (Patent Documents 1 and 2).
Patent Document 1: JP-T-2003-511532
Patent Document 2: JP-A-2004-143314

### DISCLOSURE OF THE INVENTION

### OBJECT TO BE ACCOMPLISHED BY THE INVENTION

It is an object of the present invention to provide a curable composition which is excellent in adhesion to a substrate and mechanical strength and which has a low viscosity and thus is excellent in workability even without incorporating a solvent or a plasticizer.

### MEANS TO ACCOMPLISH THE OBJECT

The present invention provides the following to accomplish the above object.
(1) A one-component moisture curing type curable composition comprising an isocyanate group-terminated prepolymer obtainable by reacting a high molecular weight polyol having a hydroxyl value of from 10 to 300 mgKOH/g with a polyisocyanate compound, wherein at least a part of the high molecular weight polyol is a polyester ether polyol obtainable by ring-opening polymerization of a mixture of an alkylene oxide and a lactone monomer in the presence of an initiator.
(2) A two-component curing type curable composition comprising a base material component consisting of an isocyanate group-terminated prepolymer obtainable by reacting a high molecular weight polyol having a hydroxyl value of from 10 to 300 mgKOH/g with a polyisocyanate compound, and a curing agent component consisting of at least one member selected from the group consisting of a hydroxyl group-terminated prepolymer obtainable by reacting a high molecular weight polyol having a hydroxyl value of from 10 to 300 mgKOH/g with a polyisocyanate compound, a high molecular weight polyol having a hydroxyl value of from 10 to 300 mgKOH/g, a low molecular weight polyol having a hydroxyl value exceeding 300 mgKOH/g, and a polyamine, wherein at least a part of the high molecular weight polyol is a polyester ether polyol obtainable by ring-opening polymerization of a mixture of an alkylene oxide and a lactone monomer in the presence of an initiator.
(3) A two-component curing type curable composition comprising a base material component consisting of a polyisocyanate compound, and a curing agent component consisting of a hydroxyl group-terminated prepolymer obtainable by reacting a high molecular weight polyol having a hydroxyl value of from 10 to 300 mgKOH/g with a polyisocyanate compound, wherein at least a part of the high molecular weight polyol is a polyester ether polyol obtainable by ring-opening polymerization of a mixture of an alkylene oxide and a lactone monomer in the presence of an initiator.
(4) The curable composition according to the above (1), (2) or (3), wherein the ring-opening polymerization of a mixture of an alkylene oxide and a lactone monomer is carried out in the presence of a composite metal cyanide complex catalyst.
(5) The curable composition according to any one of the above (1) to (4), wherein the polyester ether polyol is obtained by ring-opening polymerization of the mixture having a molar ratio of the alkylene oxide/the lactone monomer of from 10/90 to 95/5.
(6) The curable composition according to any one of the above (1) to (5), wherein the polyester ether polyol has a ratio of the weight average molecular weight (Mw)/the number average molecular weight (Mn) of from 1.01 to 1.30, a total unsaturation degree of at most 0.07 meq/g and a hydroxyl value of from 11 to 112 mgKOH/g.
(7) The curable composition according to any one of the above (1) to (6), which is used for an adhesive, a sealing material, a resilient paving material or a water-proof material.

### EFFECTS OF THE INVENTION

According to the present invention, it is possible to present a one-component moisture curing type or two-component curing type curable composition which has a low viscosity and is excellent in workability even without incorporating a solvent or a plasticizer and which is excellent in adhesion to a substrate to be bonded.

### BEST MODE FOR CARRYING OUT THE INVENTION

### POLYESTER ETHER POLYOL

In the present invention, a high molecular weight polyol having a hydroxyl value of from 10 to 300 mgKOH/g is used. As at least a part thereof, a polyester ether polyol is employed which is obtainable by ring-opening addition polymerization of a mixture of an alkylene oxide and a lactone monomer in the presence of an initiator. Now, the polyester ether polyol will be described.

### INITIATOR

As the initiator to be used at the time of producing the polyester ether polyol, it is preferred to use a compound having from 2 to 8 active hydrogen atoms per molecule. The compound having such active hydrogen atoms may, for example, be a polyhydric alcohol, a polyamine, - an alkanolamine or a phenol. A preferred specific initiator may, for example, be a polyhydric alcohol, such as a dihydric alcohol such as ethylene glycol, diethylene glycol, polyethylene glycol, propylene glycol, dipropylene glycol or 1,4-butanediol, a trihydric alcohol such as trimethylol propane, trimethylol ethane or glycerol; a tetrahydric alcohol such as pentaerythritol; a hexahydric alcohol such sorbitol or dipentaerythritol; or an octahydric alcohol such as sucrose. Further, a polyamine such as diethylenediamine, hexamethylenediamine or tolylenediamine; an alkanolamine such as monoethanolamine, propanolamine or diethanolamine; or bisphenol A, may, for example, be mentioned.

Further, a polyether polyol obtained by adding an alkylene oxide to such a polyhydric alcohol, a polyamine, an alkanolamine or a phenol, which has a molecular weight as calculated by hydroxyl value per hydroxyl group of from 150 to 1,500 (hydroxyl value: 37 to 374 mgKOH/g) may, for example, be mentioned.

Further, it is possible to use also a polyoxytetramethylene polyol, a polyester polyol or a polycarbonate polyol having a molecular weight as calculated by hydroxyl value per hydroxyl group of from 150 to 1,500 (hydroxyl value: 37 to 374 mgKOH/g). The polyester polyol may be one obtainable by a condensation reaction of a polyhydric alcohol with a polybasic carboxylic acid, or one obtainable by ring-opening polymerization of a lactone monomer using a polyhydric alcohol as an initiator.

As the initiator, a polyhydric alcohol or a polyether polyol having an alkylene oxide added to a polyhydric alcohol as an initiator and having a molecular weight as calculated by hydroxyl value per hydroxyl group of from 150 to 1,500 (hydroxyl value: 37 to 374 mgKOH/g) is preferred. Further, as described hereinafter, in a case where a composite metal cyanide complex catalyst is used as a ring-opening addition polymerization catalyst, it is particularly preferred to employ such a polyether polyol.

The number of hydroxyl groups in the polyester ether polyol agrees to the number of active hydrogen atoms per molecule of the initiator. In the present invention, as the above initiator, it is preferred to use a compound having from 2 to 3 active hydrogen atoms. Further, the number of hydroxyl groups in the polyester ether polyol in the present invention is preferably from 2 to 3.

The molecular weight as calculated by hydroxyl value of a polymer is a value calculated by means of the following formula by using a hydroxyl value measured by a method in accordance with JIS K1557.

Molecular weight as calculated by hydroxyl value = (56,100/hydroxyl value) x number of hydroxyl groups in polyol.

### ALKYLENE OXIDE

In the present invention, as the alkylene oxide to be polymerized with the lactone monomer in the presence of an initiator, a C₂₋₄ alkylene oxide is preferred. Such an alkylene oxide may, for example, be propylene oxide, 1,2-butylene oxide, 2,3-butylene oxide or ethylene oxide. Such alkylene oxides may be used alone or in combination as a mixture of two or more of them. In the process of the present invention, it is preferred to use ethylene oxide or propylene oxide, and it is particularly preferred to use propylene oxide alone.

### LACTONE MONOMER

In the present invention, the lactone monomer may, for example, be ε-caprolactone, y-valerolactone or 5-valerolactone, and ε-caprolactone is particularly preferred.

The ratio of the alkylene oxide to the lactone monomer is preferably from 10/90 to 95/5, particularly preferably from 20/80 to 80/20, by molar ratio. By adjusting the lactone monomer to be at least 5 mol% based on the total amount of the alkylene oxide and the lactone monomer, it is possible to improve the adhesive properties of the finally obtainable curable composition. Further, by adjusting it to be at most 90 mol%, it is possible to suppress the viscosity of the obtainable polyol to be low.

### RING-OPENING ADDITION POLYMERIZATION CATALYST

The polyester ether polyol in the present invention can be produced by ring-opening addition polymerization of a mixture of the alkylene oxide and the lactone monomer to the above described initiator. It is preferred to use a ring-opening addition polymerization catalyst in this polymerization reaction, since it is thereby possible to increase the polymerization reaction rate. As such a ring-opening addition polymerization catalyst, an alkali catalyst such as potassium hydroxide or cesium hydroxide, a composite metal cyanide complex catalyst or a phosphazene catalyst may, for example, be mentioned. It is particularly preferred to use a composite metal cyanide complex catalyst, since it is thereby possible to obtain a polyester ether polyol having a smaller value of Mw/Mn. As such a composite metal cyanide complex, one having an organic ligand coordinated to a zinc hexacyanocobaltate complex, is preferred. As the organic ligand, an ether such as ethylene glycol dimethyl ether or diethylene glycol dimethyl ether or an alcohol such tert-butyl alcohol, is preferred.

### CHARACTERISTICS

The polyester ether polyol in the present invention preferably has Mw/Mn of from 1.01 to 1.30 where Mw is the weight average molecular weight, and Mn is the number average molecular weight. When the Mw/Mn is at most 1.30, the obtainable polyol can be made to have a low viscosity. Mw and Mn are ones measured, as calculated as polystyrene, by gel permeation chromatograph (GPC) method. By controlling the molecular weight as calculated by hydroxyl value of the initiator, the type and amount of the ring-opening addition polymerization catalyst, the amounts of the alkylene oxide and the lactone monomer to be polymerized and the polymerization reaction conditions, etc., Mw/Mn can be adjusted to be within the above preferred numerical range.

The hydroxyl value of the obtainable polyester ether polyol is preferably from 11 to 112 mgKOH/g, particularly preferably from 22 to 80 mgKOH/g. Namely, the molecular weight calculated by hydroxyl value per hydroxyl group is preferably from 500 to 5,000, particularly preferably from 700 to 2,500. By adjusting the molecular weight calculated by hydroxyl value per hydroxyl group to be at least 500, the adhesive properties of the obtainable curable composition to a substrate to be bonded can be made to be excellent. Further, by adjusting the molecular weight calculated by hydroxyl value per hydroxyl group to be at most 5,000, it is possible to adjust the viscosity of the obtainable curable composition to be low.

Further, with regard to the polyester ether polyol to be used in the present invention, the value obtained by deducting from the molecular weight as calculated by hydroxyl value, the molecular weight of the initiator and then dividing the remaining molecular weight by the number of functional groups of the initiator, is preferably from 100 to 2,000, particularly preferably from 200 to 1,500. By adjusting such a value to be at most 2,000, the viscosity of the obtainable polyester ether polyol will not be too high, and by adjusting it to be at least 100, the adhesive properties can be obtained. Adjustment of the above value to be within such a preferred range, can readily be carried out by suitably adjusting the molar amounts of the lactone monomer and the alkylene oxide to be polymerized with the initiator, just like adjustment of the above molecular weight as calculated by hydroxyl value. Here, the above expression "the value obtained by deducting from the molecular weight as calculated by hydroxyl value, the molecular weight of the initiator and then dividing the remaining molecular weight by the number of functional groups of the initiator" is chemically meant for the average molecular weight per one random copolymer chain formed by copolymerization of the alkylene oxide and the lactone monomer.

The polyester ether polyol of the present invention preferably has a total unsaturation degree of at most 0.07 meq/g, more preferably at most 0.05 meq/g, most preferably at most 0.01 meq/g, whereby the mechanical properties (particularly tensile properties) of the cured product will be excellent.

### HIGH MOLECULAR WEIGHT POLYOL

In the present invention, as the high molecular weight polyol, a high molecular weight polyol having a hydroxyl value of from 10 to 300 mgKOH/g, which contains the above mentioned polyester ether polyol, is used.

Such a high molecular weight polyol preferably has a hydroxyl value of from 11 to 112 mgKOH/g, most preferably from 22 to 80 mgKOH/g. Namely, the molecular weight as calculated by hydroxyl value per hydroxyl group is preferably from 187 to 5,610, more preferably from 500 to 5,000, particularly preferably from 700 to 2,500.

The high molecular weight polyol contains the above mentioned polyester ether polyol, and in the entire high molecular weight polyols to be used as a raw material for the curable composition of the present invention, at least 30 mass% is preferably the above mentioned polyester ether polyol, and further preferably, at least 50 mass% is the above mentioned polyester ether polyol. Particularly preferably, substantially 100 mass% is the above mentioned polyester ether polyol.

Polyols other than the above mentioned polyester ether polyol may, for example, be a polyoxypropylene polyol, a polyoxyethylene polyol or a polyoxyethylenepropylene polyol obtainable by ring-opening addition polymerization of an alkylene oxide to a compound having from 2 to 8 active hydrogen atoms as an initiator, a polyester polyol obtainable by a condensation reaction of a polyhydric alcohol with a polybasic carboxylic acid, a polyester polyol, a polyoxytetramethylene polyol or a polycarbonate polyol obtainable by ring-opening polymerization of a lactone monomer to a polybasic alcohol as an initiator. Such polyols are preferably polyols having from 2 to 8 hydroxyl groups, more preferably polyols having from 2 to 3 hydroxyl groups. They preferably have a hydroxyl value of from 10 to 300 mgKOH/g, more preferably from 11 to 112 mgKOH/g, most preferably from 22 to 80 mgKOH/g. Namely, the molecular weight as calculated by hydroxyl value per hydroxyl group is preferably from 187 to 5,610, more preferably from 500 to 5,000, particularly preferably from 700 to 2,500.

### POLYISOCYANATE COMPOUND

The polyisocyanate compound which may be used in the present invention, is not particularly limited. It may, for example, be an aromatic polyisocyanate compound such as diphenylmethane diisocyanate (pure MDI), polyphenylene polymethylene polyisocyanate (polymeric MDI), 2,4-tolylene diisocyanate (2,4-TDI) or 2,6-tolylene diisocyanate (2,6-TDI); an aralkyl polyisocyanate compound such as xylylene diisocyanate or metatetramethylxylene diisocyanate; an aliphatic polyisocyanate compound such as hexamethylene diisocyanate or 2,2,4-trimethylhexamethylene diisocyanate; an alicyclic polyisocyanate compound such as isophorone diisocyanate or 4,4'-methylenebis(cyclohexyl isocyanate); or modified products such as urethane modified products, bullet modified products, allophanate modified products, carbodiimide modified products or isocyanurate modified products, which are obtainable from the above polyisocyanate compounds.

As polyisocyanate compounds to be used in the present invention, aromatic diisocyanates and their modified products are preferred, since they are excellent in reactivity with the polyol compounds, and the viscosities of the isocyanate group terminated prepolymers thereby obtainable are usually low. Among them, pure MDI, polymeric MDI, 2,4-TDI, 2,6-TDI and their modified products are preferred. They may be used alone or may be a mixture of two or more of them.

### CURABLE COMPOSITION

The curable composition of the present invention is preferably selected from the following (a) to (c) depending upon the particular use, etc.
(a) A one-component moisture curing type curable composition comprising an isocyanate group-terminated prepolymer obtainable by reacting a high molecular weight polyol having a hydroxyl value of from 10 to 300 mgKOH/g with a polyisocyanate compound.
(b) A two-component curing type curable composition comprising a base material component consisting of an isocyanate group-terminated prepolymer obtainable by reacting a high molecular weight polyol having a hydroxyl value of from 10 to 300 mgKOH/g with a polyisocyanate compound, and a curing agent component consisting of at least one member selected from the group consisting of a hydroxyl group-terminated prepolymer obtainable by reacting a high molecular weight polyol having a hydroxyl value of from 10 to 300 mgKOH/g with a polyisocyanate compound, a high molecular weight polyol having a hydroxyl value of from 10 to 300 mgKOH/g, a low molecular weight polyol having a hydroxyl value exceeding 300 mgKOH/g, and a polyamine.
(c) A two-component curing type curable composition comprising a base material component consisting of a polyisocyanate compound, and a curing agent component consisting of a hydroxyl group-terminated prepolymer obtainable by reacting a high molecular weight polyol having a hydroxyl value of from 10 to 300 mgKOH/g with a polyisocyanate compound.

Now, the curable compositions (a) to (c) of the present invention will be sequentially described.

### (a) ONE-COMPONENT MOISTURE CURING TYPE CURABLE COMPOSITION

The one-component moisture curing type curable composition in the present invention comprises an isocyanate group-terminated prepolymer obtainable by reacting a high molecular weight polyol having a hydroxyl value of from 10 to 300, which contains the above mentioned polyester ether polyol, with a polyisocyanate compound.

The isocyanate group-terminated prepolymer is preferably produced by reacting the above mentioned high molecular weight polyol with the polyisocyanate compound so that the molar ratio of isocyanate group/hydroxyl group would be from 1.3 to 5.0, more preferably from 1.8 to 4.5. If the molar ratio is less than 1.3, the molecular weight of the formed prepolymer tends to be large, and the viscosity tends to be high, such being undesirable from the viewpoint of the workability and moisture-curability. On the other hand, if it exceeds 5.0, the starting material organic polyisocyanate monomer tends to remain substantially, whereby the mechanical properties of a finally obtainable cured product tend to be poor, such being undesirable.

Further, the isocyanate group-terminated prepolymer preferably has an isocyanate group content of from 0.5 to 10 mass%, particularly preferably from 1 to 7 mass%.

The one-component moisture curing type curable composition of the present invention contains the isocyanate group-terminated prepolymer thus obtained, and can be prepared by further incorporating various additives as described hereinafter.

### (b) TWO-COMPONENT CURING TYPE CURABLE COMPOSITION

One of the two-component curing type curable compositions of the present invention comprises a base material component consisting of a isocyanate group-terminated prepolymer obtainable by reacting a high molecular weight polyol with a polyisocyanate compound, and a curing agent component consisting of at least one member selected from the group consisting of a hydroxyl group-terminated prepolymer obtainable by reacting a high molecular weight polyol with a polyisocyanate compound, a high molecular weight polyol, a low molecular weight polyol and a polyamine.

### BASE MATERIAL

The isocyanate group terminated prepolymer to be used as the base material component can be prepared in the same manner as the prepolymer useful for the one-component moisture curing type curable composition and can be prepared by using the above mentioned high molecular weight polyol and the polyisocyanate compound and by reacting them so that the molar ratio of isocyanate group/hydroxyl group would be from 1.3 to 5.0. The molar ratio of isocyanate group/hydroxyl group is more preferably from 1.5 to 4.0. If it is less than 0.3, the molecular weight of the formed prepolymer tends to be large, and the viscosity tends to be high, such being undesirable from the viewpoint of the workability and moisture-curability. On the other hand, if it exceeds 5.0, the starting material organic polyisocyanate monomer tends to remain substantially, whereby the mechanical properties of the finally obtainable cured product tend to be poor, such being undesirable.

Further, the isocyanate group-terminated prepolymer preferably has an isocyanate group content of from 0.5 to 10 mass%, particularly preferably from 1 to 5 mass%.

### CURING AGENT

As the curing agent component, a curing agent component consisting of at least one member selected from the group consisting of a hydroxyl group-terminated prepolymer, a high molecular weight polyol, a low molecular weight polyol and a polyamine, is incorporated.

The hydroxyl group-terminated prepolymer useful as a curing agent may be prepared by using the above mentioned high molecular weight polyol and the polyisocyanate compound and by reacting them so that the molar ratio of isocyanate group/hydroxyl group would be from 0.3 to 0.8. If the molar ratio exceeds 0.8, the molecular weight of the formed prepolymer tends to be too large, and the viscosity tends to be high, such being undesirable. If it is less than 0.3, the polyol tends to remain substantially as unreacted, such being undesirable.

Further, the hydroxyl group-terminated prepolymer preferably has a hydroxyl equivalent of from 0.05 to 10 meq/g, particularly preferably from 0.1 to 5 meq/g.

As the curing agent, a high molecular weight polyol itself may be employed. In such a case, the above mentioned high molecular weight polyol may be used.

The low molecular weight polyol having a hydroxyl value exceeding 300 mgKOH/g useful as a curing agent may, for example, be a dihydric alcohol such as ethylene glycol, diethylene glycol, polyethylene glycol, propylene glycol, dipropylene glycol or 1,4-butanediol; a trihydric alcohol such as trimethylol propane, trimethylol ethane or glycerol; a tetrahydric alcohol such as pentaerythritol; a hexahydric alcohol such sorbitol or dipentaerythritol; or an octahydric alcohol such as tripentaerythritol or sucrose. Further, a polyether polyol having a hydroxyl value exceeding 300 may also be used.

The polyamine useful as the curing agent may, for example, be an aliphatic polyamine such as ethylenediamine, hexamethylenediamine or tolylenediamine; an aromatic polyamine such as 4,4'-methylenebis(2-chloroaniline), bis(methylthio)toluenediamine or diethyltoluenediamine; or an alkanolamine such as monoethanolamine, propanolamine or diethanolamine.

As the curing agent, particularly preferred is a combination of a hydroxyl group-terminated prepolymer or a high molecular weight polyol with a low molecular weight polyol or a polyamine. In such a case, it is preferred to use them so that the hydroxyl group-terminated prepolymer or the high molecular weight polyol, and the low molecular weight polyol or the polyamine, would be in a molar ratio of from 10/90 to 90/10, preferably from 30/70 to 70/30.

In a case where a hydroxyl group-terminated prepolymer or a high molecular weight polyol is used as the curing agent, the polyester ether polyol in the present invention may be contained in either one of the high molecular weight polyol used as a starting material for the isocyanate group-terminated prepolymer as the base material and the high molecular weight polyol used as the curing agent. For example, all of the high molecular weight polyol as the starting material for the isocyanate group-terminated prepolymer may be the above mentioned polyester ether polyol, and the high molecular weight polyol to be used as the curing agent may not contain the above polyester ether polyol.

In the present invention, of the total amount of high molecular weight polyols having a hydroxyl value of from 10 to 300 to be used as starting materials for the curable composition, at least a part may be the above mentioned polyester ether polyol. Of the total amount of the high molecular weight polyols, at least 30 mass% is preferably the above mentioned polyester ether polyol, and at least 50 mass% is more preferably the above mentioned polyester ether polyol. Most preferably, substantially 100 mass% is the above mentioned polyester ether polyol.

The proportions of the base material and the curing agent are preferably such that the molar ratio of isocyanate groups in the base material/total active hydrogen containing groups (total number of hydroxyl groups and amino groups) in the curing agent is from 0.8 to 1.2. If the molar ratio is outside such a range, crosslinking tends to be inadequate, whereby the physical properties such as mechanical properties, solvent resistance, water resistance, etc., tend to deteriorate, or the workability tends to deteriorate, such being undesirable.

### (c) TWO-COMPONENT CURING TYPE CURABLE COMPOSITION

Another one of the two-component curing type curable compositions of the present invention is a two-component curing type curable composition comprising a base material component consisting of a polyisocyanate compound, and a curing agent component consisting of a hydroxyl group-terminated prepolymer obtainable by reacting a high molecular weight polyol having a hydroxyl value of from 10 to 300 mgKOH/g with a polyisocyanate compound.

### BASE MATERIAL

As the polyisocyanate compound to be used as the base material, the above mentioned compound may be used. From the viewpoint of the reactivity and handling efficiency, a modified product of an aromatic diisocyanate is preferred. As the modified product, an urethane modified product, a bullet modified product, an allophanate modified product, a carbodiimide modified product or an isocyanurate modified product may, for example, be mentioned. Among them, the above mentioned modified product of pure MDI, polymeric MDI, 2,4-TDI or 2,6-TDI is preferred. These modified products may be used alone or may be a mixture of two or more of them.

### CURING AGENT

As the curing agent, a hydroxyl group-terminated prepolymer obtainable by reacting the above mentioned high molecular weight polyol with the polyisocyanate compound, may be used. The hydroxyl group-terminated prepolymer may be prepared by using the above mentioned high molecular weight polyol and the polyisocyanate compound and reacting them so the that molar ratio of isocyanate group/hydroxyl group would be from 0.3 to 0.8. If the molar ratio exceeds 0.8, the molecular weight of the formed prepolymer tends to be too large, and the viscosity tends to be high, such being undesirable. If it is less than 0.3, the polyol tends to remain substantially as unreacted, such being undesirable.

The hydroxyl group-terminated prepolymer preferably has a hydroxyl equivalent of from 0.05 to 10 meq/g, particularly preferably from 0.1 to 5 meq/g.

### ADDITIVES

To the curable compositions of the present invention, the following additives may be incorporated as the case requires.

### CURING CATALYST

If necessary, a curing catalyst may be used. For example, a known catalyst to accelerate an urethane-forming reaction or a urea reaction may be used, and for example, a tertiary amine compound such as triethylamine, an organic acid tin salt such as dibutyltin dilaurate, dioctyltin maleate or tin 2-ethylhexanoate, or an organic acid lead salt may be mentioned.

### PLASTICIZER

A plasticizer may be used. The plasticizer which may be used, may, for example, be dioctyl phthalate, dibutyl phthalate, diisononyl phthalate, dioctyl adipate, diisononyl adipate, isodenyl succinate, butyl oleate, tricresyl phosphate, adipic acid-propylene glycol polyester or a bran oil fatty acid ester. The curable compositions of the present invention can be made to have a low viscosity by using a certain specific polyester ether polyol, and accordingly, it is preferred not to use a plasticizer, or even if it is used, its amount should preferably be small. Its amount is preferably from 0 to 20 mass%, more preferably from 0 to 10 mass%, most preferably substantially 0, in the curable compositions (100 mass%).

### SOLVENT

In the present invention, a solvent may be used. Particularly in an application to an adhesive for a food product packaging film, it is preferred to use a solvent. The solvent which may be used, may, for example, be an aliphatic hydrocarbon such as isoparaffin or mineral spirit; an acetic acid ester such as ethyl acetate or butyl acetate; a ketone such as methyl ethyl ketone or methyl isobutyl ketone; an aromatic hydrocarbon such as toluene or xylene, or an amide such as dimethylformamide.

The curable compositions of the present invention can be made to have a low viscosity by using a specific polyester ether polyol. Accordingly, even if a solvent is used, its amount can be limited to a small amount, and it is possible to use a mild solvent. Thus, no solvent may be used, or even if it is used, its amount may be small. Further, use of a mild solvent i.e. a aliphatic hydrocarbon or an acetic acid ester, is preferred.

The amount of the solvent to be used is preferably from 0 to 50 mass%, particularly preferably from 0 to 30 mass%, in the curable compositions (100 mass%).

### FILLER

For the curable compositions of the present invention, a filler may be used as the case requires. Use of a filler is preferred in an application to e.g. an adhesive for building materials, a coating material, a sealing material, a resilient paving material or a water-proofing material. For example, calcium carbonate, titanium oxide, magnesium carbonate, magnesium oxide, magnesium hydroxide, iron oxide, zinc oxide, barium oxide, zinc carbonate, carbon black, silica or diatomaceous earth may be mentioned. The amount of the filler to be used is preferably from 0 to 50 mass%, more preferably from 0 to 30 mass%, in the curable compositions (100 mass%).

### OTHER ASSISTANTS

Further, a thixotropic agent, an antioxidant, an ultraviolet absorber, a pigment, a flame retardant, a defoaming agent or an adhesion-imparting agent may, for example, be added as the case requires. As the thixotropic agent, AEROSIL (product of Nippon Aerosil Co., Ltd.), an aliphatic amide or hydrogenated castor oil may, for example, be mentioned. As the antioxidant, butylhydroxytoluene (BHT), butylhydroxyanisole (BHA), diphenylamine, phenylenediamine or triphenyl phosphite may, for example, be mentioned. As the ultraviolet absorber, a hindered phenol type, a benzotriazole type or hindered amine type may, for example, be mentioned. As the inorganic pigment, titanium dioxide, zinc oxide, ultramarine blue, iron oxide red, lithopone, lead, cadmium, iron, cobalt, aluminum, a chloride or a sulfate may, for example, be mentioned. As the organic pigment, an azo pigment or a copper phthalocyanine pigment may, for example, be mentioned. As the flame retardant, a bromine compound or a phosphorus compound such as a chloroalkyl phosphate, dimethyl-methyl phosphate, ammonium polyphosphate, neopentyl bromide-polyether or polyether bromide, may be used. As the adhesion-imparting gent, a terpene resin, a phenol resin, a rosin resin or a xylene resin may be used.

The process for producing the curable composition of the present invention is not particularly limited, but preferably, the above mentioned various essential components and, optionally, various additives, are added and thoroughly kneaded and uniformly dispersed by means of a stirring device such as a mixer under a reduced pressure or in a nitrogen atmosphere to obtain the composition.

The one-component moisture curing type curable composition of the present invention is produced under such a condition that no moisture is permitted to enter and stored in a sealed container. At the time of its use, it is taken out from the container, applied to a substrate to be bonded and exposed to atmospheric air for curing.

Whereas, with respect to the two-component curing type curable composition of the present invention, the base material component and the curing agent component are separately prepared. At the time of it use, the base material and the curing agent are mixed, and the mixture is applied to a substrate to be bonded and can be cured at room temperature or can be cured by heating, as the case requires.

In a case where the base material or the curing agent is diluted by means of a solvent, after application to the substrate to be bonded, curing can be carried out while the solvent is removed under heating at a temperature of from room temperature to 100°C, preferably from 50 to 80°C. Whereas, in a case where the base material and the curing agent are mixed in the absence of a solvent, the base material and the curing agent may, respectively, be heated at a temperature of from room temperature to 100°C, preferably from 50 to 80°C and may be coated to a substrate to be bonded, if necessary, while the mixture is further heated. Further, after application to the substrate to be bonded, aging is carried out at a temperature of from room temperature to 100°C, preferably from 50 to 80°C, to complete the curing.

The curable compositions of the present invention have a low viscosity and thus have excellent workability. Further, they are excellent also in adhesive strength and yet excellent in adhesion to a wide range of materials.

The substrate to be bonded may, for example, be a wood material; a metal material such as aluminum, iron or copper; a resin material such as polyamide, polyethylene terephthalate or polypropylene; concrete; asphalt; or stone material. Particularly, as the material to be bonded, wood material, aluminum or a resin such as polyamide, polyethylene terephthalate or polypropylene is preferred.

The curable compositions of the present invention can be used for e.g. adhesives, coating materials, sealing materials, resilient paving materials or water-proofing materials.

### EXAMPLES

Now, the present invention will be described in further detail with reference to Examples, but it should be understood that the present invention is by no means thereby restricted.

Polyols employed as starting materials in Examples are shown in Table 1. In the Table, the molecular weight is a molecular weight as calculated by hydroxyl value.

**TABLE 1**

| Name | Contents |
|---|---|
| PPG-700 | Polyoxypropylenediol having a hydroxyl value of 160 (molecular weight: 700) produced by using propylene glycol as an initiator and KOH catalyst. |
| PPG-2000 | Polyoxypropylenediol having a hydroxyl value of 56 (molecular weight: 2,000) produced by using propylene glycol as an initiator, and KOH catalyst |
| PPG-3000 | Polyoxypropylenetriol having a hydroxyl value of 56 (molecular weight: 3,000) produced by using glycerol as an initiator, and KOH catalyst |
| PPG-4000 | Polyoxypropylenediol having a hydroxyl value of 28 (molecular weight: 4,000) produced by using propylene glycol as an initiator, and KOH catalyst |
| PPG-6000 | Polyoxypropylenetriol having a hydroxyl value of 28 (molecular weight: 6,000) produced by using glycerol as an initiator, and KOH catalyst |
| PTMG-1000 | Polyoxytetramethylenediol having a hydroxyl value of 112 (molecular weight: 1,000), manufactured by Hodogaya Chemical Co., Ltd., tradename: PTG-1000SN |
| PMPDA-1 | Poly(3-methylpentanediol)adipate diol having a hydroxyl value of 112 (molecular weight: 1,000), manufactured by Kuraray Co., Ltd., tradename: P-1010 |
| PMPDA-2 | Poly(3-methylpentanediol)adipate diol having a hydroxyl value of 56 (molecular weight: 2,000), manufactured by Kuraray Co., Ltd., tradename: P-2010 |
| PBA | Poly(butylenediol)adipate diol having a hydroxyl value of 112 (molecular weight: 1,000), manufactured by Nippon Polyurethane Industry Co., Ltd., tradename: N-4009 |

The viscosity (unit: mPa·s) of a prepolymer was measured at 25°C by a method disclosed in JIS K1557. Further, the isocyanate group content will be referred to as an NCO content, and the hydroxyl group content will be referred to as an OH content.

### (1) PREPARATION OF POLYESTER ETHER POLYOL

Into a 5 L pressure reactor equipped with a stirrer and a nitrogen supply pipe, 700 g of PPG-700 as an initiator and 100 mg of zinc hexacyanocobaltate-tert-butyl alcohol complex catalyst as a ring-opening addition polymerization catalyst were put, and then, the interior of the reactor was flushed with nitrogen and heated to 120°C. A mixture of 429 g of propylene oxide and 871 g of ε-caprolactone was quantitatively supplied over a period of about 5 hours. After completion of the supply, the reaction was further continued for one hour at 120°C to obtain a polyester ether polyol (polyol P-1). The characteristics of the obtained polyol are shown in Table 2.

Then, using the initiator of the type shown in Table 2 and the alkylene oxide (AO in Table) and ε-caprolactone (CL in Table) of the types and proportions shown in Table 2, polyols P-2 to P-5, R-1 and R-2 were prepared in the same manner. The characteristics of the obtained polyols are shown in Table 2. In the Table, PO represents propylene oxide, and EO represents ethylene oxide.

### (2) PREPARATION OF ISOCYANATE GROUP-TERMINATED PREPOLYMER FOR ONE-COMPONENT MOISTURE CURING TYPE CURABLE COMPOSITION, AND MECHANICAL PROPERTIES (EXAMPLES 1A TO 5A AND COMPARATIVE EXAMPLES 1A TO 4A)

Into a reactor equipped with a stirrer and a nitrogen supply pipe, a polyol of the type shown in Table 3 or 4 and pure MDI (tradename: MILLIONATE MT, manufactured by Nippon Polyurethane Industry Co., Ltd., NCO content: 33.6 mass%, the same applies hereinafter) as a polyisocyanate, were charged so that NCO/OH i.e. the ratio of isocyanate groups of the polyisocyanate to hydroxyl groups of the polyol, would be the ratio shown in Table 3 or 4, and reacted at 80°C for 4 hours in a nitrogen atmosphere. Upon confirming that the NCO content reached the theoretical terminal point, the reaction was terminated, and the content was withdrawn to obtain a prepolymer having an NCO content of about 5 mass%.

To 100 parts by mass of this prepolymer, 1 part by mass of a defoaming agent (tradename: DISPARLON OX-710, manufactured by Kusumoto Chemicals, Ltd., acrylic compound) was added, followed by stirring and vacuum defoaming to obtain a one-component moisture curing type curable composition containing an isocyanate goupr-terminated prepolymer. The obtained curable composition was applied on a biaxially-stretched polypropylene film (OPP film) by an applicator so that the film thickness would be 500 µm and aged for one week at 20°C under a condition of a relative humidity of 60%, for moisture curing. The obtained film was cut into a prescribed shape by a dumbbell cutter and peeled from the OPP film to obtain a test specimen, whereupon the physical properties were measured.

In Tables 3 and 4,- the conditions for charging the starting materials, the NCO content (mass%) and the viscosity (mPa·s) at 25°C of the obtained prepolymer, as well as the physical properties of the film obtained by moisture curing, such as 100% modulus (MPa), 300% modulus (MPa), break strength (MPa) and elongation at break (%) are shown. The conditions for measuring the physical properties were in accordance with JIS K7311. As the measuring instrument, a tensile tester was employed, and using dumbbell number 3 as a test specimen, and the measurement was carried out under a condition of a tensile speed of 200 mm/min. Table 3 shows working Examples of the present invention, and Table 4 shows Comparative Examples.

The following has been made clear from Tables 3 and 4. Namely, the one-component moisture curing type curable composition containing a prepolymer obtained by using a polyester ether polyol having a random polymer chain of a lactone monomer and an alkylene oxide in the present invention, is easy to use with a low viscosity as compared with ones in Comparative Examples wherein a polyester polyol, or a polyol obtainable by ring-opening addition polymerization of only an alkylene oxide to a polyester polyol, is used. Further, the cured product obtained by curing it has a break strength equal to a cured product of a curable composition containing a prepolymer obtained by using a polyester polyol, or a polyol obtainable by ring-opening addition polymerization of only an alkylene oxide to a polyester polyol, and shows excellent physical properties with a large elongation. Further, as compared with a case where a polyether polyol having no ester group was used, it was found that although the viscosity of the curable composition tended to be relatively high, the break strength of the cured product of the curable composition was large, and it was excellent with a large elongation.

### (3) PREPARATION OF ISOCYANATE GROUP-TERMINATED PREPOLYMER FOR TWO-COMPONENT CURING TYPE CURABLE COMPOSITION, AND MECHANICAL PROPERTIES (EXAMPLES 6A AND 7A AND COMPARATIVE EXAMPLES 5A TO 7A)

### (3-1) Preparation of isocyanate group-terminated prepolymers (Preparation Examples 1 to 4)

Into a reactor equipped with a stirrer and a nitrogen-supply pipe, a polyol shown in Table 5 and pure MDI as a polyisocyanate were charged so that NCO/OH i.e. the ratio of isocyanate groups of the polyisocyanate to hydroxyl groups of the polyol would be the ratio shown in Table 5 and reacted at 80°C for 4 hours in a nitrogen atmosphere. Upon confirming that the NCO mass% reached the theoretical terminal point, the reaction was terminated, and the content was withdrawn. Table 5 shows the conditions for charging the starting materials, the NCO content (mass%) and the viscosity (mPa·s) at 25°C of the obtained prepolymer.

### (3-2) Preparation of hydroxyl group-terminated urethane prepolymers (Preparation Examples 5 to 7)

Into a reactor equipped with a stirrer and a nitrogen-supply pipe, a polyol shown in Table 5 and TDI-80 (mixture of 2,4-TDI and 2,6-TDI in a mass ratio of 80/20, manufactured by Nippon Polyurethane Industry Co., Ltd., CORONATE T-80) as a polyisocyanate were charged so that NCO/OH i.e. the ratio of isocyanate groups of the polyisocyanate to hydroxyl groups of the polyol would be the ratio shown in Table 5, and reacted at 90°C for 7 hours in a nitrogen atmosphere. Upon confirming that no absorption of the isocyanate groups at 2,250 cm⁻¹ was observed in the infrared absorption spectrum, the reaction was terminated to obtain a hydroxyl group-terminated urethane prepolymer. Table 5 shows the conditions for charging the starting materials, and the OH content (meq/g) and the viscosity (mPa·s) at 25°C of the obtained prepolymer.

### (3-3) Mechanical properties of two-component curing type curable compositions

An isocyanate group-terminated urethane prepolymer shown in Table 6 (NCO terminated prepolymer in the Table) was used as the base material. A hydroxyl group-terminated urethane prepolymer shown in Table 6 (OH-terminated prepolymer in the Table) or a mixture of a polyol and 1,4-butanediol, was used as a curing agent. The amount of 1,4-butanediol was 50 mol% relative to 50 mol% the hydroxyl group-terminated urethane prepolymer or the polyol.

The base material and the curing agent were heated to 50°C and then blended in such a ratio that total NCO groups in the base material/total OH groups in the curing agent (molar ratio) would be 1.05. Further, 2 mass%, based on the total mass of the curing agent and the base material, of dibutyltin dilaurate as a catalyst, and a dofoaming agent (tradename: DISPARLON OX-710, manufactured by Kusumoto Chemicals, Ltd.) were mixed, followed by stirring and vacuum defoaming to obtain a mixed composition (a two-component curing type curable composition). Such a mixed composition was applied on an OPP film by an applicator so that the film thickness would be 500 µm and cured at 80°C over a period of one hour.

Further, after aging for 24 hours under conditions of 20°C and a relative humidity of 60°C, a test specimen was prepared in the same manner as in the above (2), and the physical properties were measured. The results are shown in Table 6. Further, the viscosity of the composition measured immediately after obtaining the composition is shown in Table 6.

As is evident from Table 6, also with respect to the two-component curing type curable composition, the curable composition employing a polyester ether polyol of the present invention is easy to use with a low viscosity as compared with a case where a polyester polyol, or a polyol obtained by ring-opening addition polymerization of only an alkylene oxide to a polyester polyol, is used. Further, the physical properties of the cured product obtained by curing the curable composition were found to have a break strength substantially equal to a case where a polyester polyol, or a polyol obtained by ring-opening addition polymerization of only an alkylene oxide to a polyester polyol, was used, and show excellent physical properties with a large elongation. Further, also as compared with a case wherein a polyether polyol having no ester bond was used, it was found that although the viscosity of the curable composition tended to be slightly high, the break strength of the cured product of the curable composition was large, and it was excellent with a large elongation.

### (4) ADHESION TESTS

Adhesion tests of the one-component moisture curing type curable compositions (Examples 1A to 5A and Comparative Examples 1A to 4A) and the two-component curing type curable compositions (Examples 6A and 7A and Comparative Examples 5A to 7A) obtained by the above described processes, were carried out under the following conditions.

### (4-1) Preparation of test samples

A curable composition was applied on a nylon film having a thickness of 300 µm by an applicator in a thickness of 250 µm, and upon expiration of about 10 minutes, strip specimens of various materials having a width of 1 cm and a length of 20 cm were put thereon and gently press-bonded with a hand.

### (4-2) Curing conditions

With a one-component moisture curing type curable composition, test specimen were aged for one week under conditions of 23°C and a relative humidity of 50%. A two-component curing type curable composition was cured at 80°C under a relative humidity of 0% for one hour and then further aged for 24 hours under conditions of 23°C and a relative humidity of 50%.

### (4-3) Materials for objects to be bonded

The following materials were used as objects to be bonded
A polyamide film having a thickness of 300 µm (hereinafter referred to simply as Ny)
A polyethylene terephthalate film having a thickness of 150 µm (hereinafter referred to simply as PET)
A plywood board having a thickness of 1 mm (hereinafter referred to simply as plywood).

An aluminum plate having a thickness of 500 µm (hereinafter referred to simply as Al).

### (4-4) Peeling test method

Using a universal tensile tester in accordance with JIS K6854, a 180° peeling test was carried out with a test specimen width of 1 cm at a tensile speed of 200±20 mm/min. The results of the adhesion tests i.e. the peel strength (unit: N/m), the peeled state and the peeled portion are shown in Tables. With respect to Examples of one-component type, the results are shown in Table 7, and with respect to Comparative Examples of one-component type, the results are shown in Table 8. With respect to Examples and Comparative Examples of two-component type, the results are shown in Table 9.

With respect to the peeled state, "AF" means interfacial failure, and "CF" means that the curable composition underwent cohesion failure. Further, "Al" at the peeled portion means that peeling was observed at the interface of Al with the curable composition. Further, the peeled state being "AF80/AF20" and the peeled portion being "Al/Ny" means that 80% was peeled at the interface of Al with the curable composition, and 20% was peeled at the interface of Ny with the curable composition.

As is evident from Tables 7, 8 and 9, it has been found that the curable composition using the polyol of the present invention has a large peel strength and presents a cured product having excellent bond strength, as compared with a case where a polyether polyol having no ester group is employed. Further, it has been made clear that it has a peel strength substantially equal to a case where a polyester polyol, or a polyol obtainable by polymerizing only an alkylene oxide to a polyester polyol, is used. Particularly, it has been found that the bond strength is equally good even when any one of a resin, a wood material and a metal plate is selected for use as an object to be bonded.

### (5) APPLICATION EXAMPLE AS WATER-PROOFING MATERIAL

By the following method, the performance when the polyester ether polyol of the present invention was used as a water-proofing material, was evaluated.

### (5-1) Two-component curing type water-proofing material

17 Parts by mass of PPG-3000 and 68 parts by mass of PPG-2000 were reacted with 15 parts by mass of TDI-80 (NCO/OH molar ratio = 2.03), to produce an isocyanate group-terminated prepolymer having a NCO content of 3.6 mass%, which was used as the base material. Further, a liquid obtained by mixing 3.55 parts by mass of 4,4'-methylenebis(2-chloroaniline), 18.3 parts by mass of P-5, 11.16 parts by mass of dioctyl phthalate, 3 parts by mass of xylene, 60 parts by mass of calcium-carbonate, 3 parts by mass of pigment paste and 1 part by mass of lead 2-ethylhexanoate (lead content: 24 mass%), was used as a curing agent. They were blended in a mass ratio of base material/curing agent = 1/2 (ratio of total NCO groups in the base material/total active hydrogen-containing groups in the curing agent = 1.07) to obtain a two-component water-proofing material.

### (5-2) One-component moisture curing type water-proofing material

To an isocyanate group-terminated prepolymer (NCO group content: 1.8 mass%) obtained by reacting 100 parts by mass of PPG-6000 and 9.8 parts by mass of polyol P-5 with 4 parts by mass of pure MDI (NCO/OH molar ratio = 2.0), 15 parts by mass of bran oil fatty acid methyl ester, 40 parts by mass of calcium carbonate, 5 parts by mass of magnesium hydroxide, 3 parts by mass of pigment pastes and 0.3 part by mass of bis(2-morpholinoethyl)ether were mixed to obtain a one-component urethane water-proofing material.

### (5-3) Evaluation of curability of water-proofing material

The water-proofing material produced by the above method was applied on a slate in an amount of 2 kg/m² and cured under conditions of 23°C and a relative humidity of 50%. The state after 12 hours was evaluated. Each of the two-component type and the one-component type was found to be well bonded to the slate, and the coated film was tack-free, and walking thereon was possible.

From such Examples, it has been found that by using the polyester ether polyol of the present invention, it is possible to provide a polyurethane coating film water-proofing material excellent in curability and adhesion to a substrate.

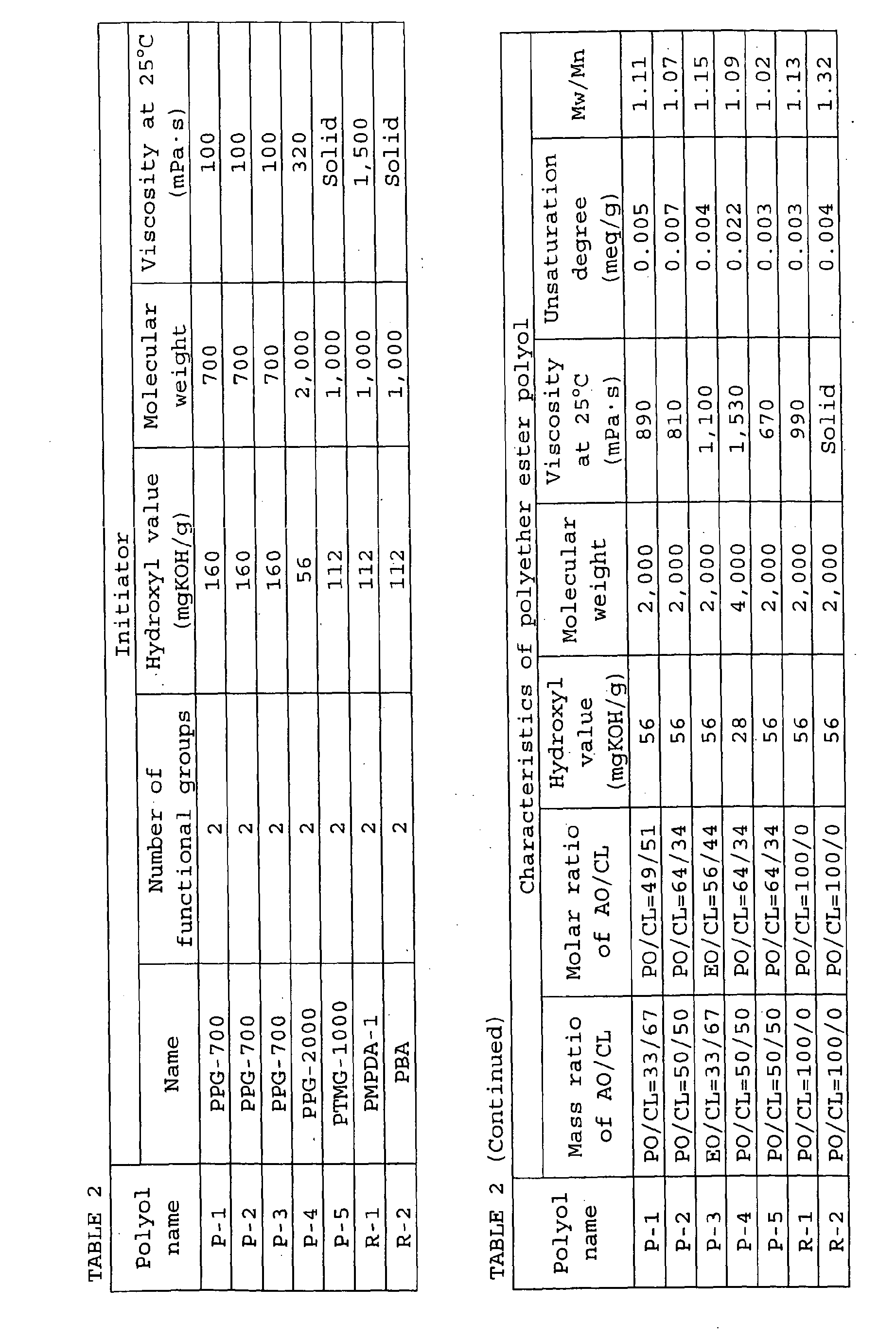

**TABLE 3**

| | | | Ex. 1A | Ex. 2A | Ex. 3A | Ex. 4A | Ex. 5A |
|---|---|---|---|---|---|---|---|
| Starting materials | Pure MDI | g | 250 | 250 | 250 | 250 | 250 |
| | P-1 | g | 750 | | | | |
| | P-2 | g | | 750 | | | |
| | P-3 | g | | | 750 | | |
| | P-4 | g | | | | 900 | |
| | P-5 | g | | | | | 750 |
| | NCO/OH | Molar ratio | 2.7 | 2.7 | 2.7 | 4.4 | 2.7 |
| Characteristics of prepolymer | NCO content | Mass% | 5.20 | 5.21 | 5.19 | 5.50 | 5.15 |
| | Viscosity at 25°C | mPa·s | 8,700 | 9,400 | 8,900 | 6,100 | 23,500 |
| Physical properties | 100% modulus | MPa | 2.61 | 2.52 | 2.55 | 2.25 | 3.41 |
| | 300% modulus | MPa | 3.49 | 3.10 | 3.41 | 3.01 | 4.56 |
| | Break strength | MPa | 9.10 | 8.07 | 8.90 | 7.85 | 11.9 |
| | Elongation at break | % | 950 | 1,020 | 980 | 1,150 | 810 |

**TABLE 4**

| | | | Comp. Ex. 1A | Comp. Ex. 2A | Comp. Ex. 3A | Comp. Ex. 4A |
|---|---|---|---|---|---|---|
| Starting materials | Pure MDI | g | 250 | 250 | 250 | 250 |
| | R-2 | g | 750 | | | |
| | PPG-2000 | g | | 750 | | |
| | PPG-4000 | g | | | 900 | |
| | PMPDA-2 | g | | | | 750 |
| | NCO/OH | Molar ratio | 3.6 | 2.1 | 2.1 | 2.1 |
| Characteristics of prepolymer | NCO content | Mass% | 5.20 | 5.19 | 4.99 | 5.07 |
| | Viscosity at 25°C | mPa·s | 624,000 | 9,700 | 4,980 | 64,300 |
| Physical properties | 100% modulus | MPa | 4.75 | 2.21 | 1.97 | 4.82 |
| | 300% modulus | MPa | 5.35 | 2.8 | 2.63 | 5.75 |
| | Break strength | MPa | 18.7 | 5.61 | 3.66 | 8.70 |
| | Elongation at break | % | 885 | 1,420 | 880 | 988 |

**TABLE 5**

| | | | Prep. Ex. 1 | Prep. Ex. 2 | Prep. Ex. 3 | Prep. Ex. 4 | Prep. Ex. 5 | Prep. Ex. 6 | Prep. Ex. 7 |
|---|---|---|---|---|---|---|---|---|---|
| | | | Ex. | Comp. EX. | Comp. Ex. | Comp. Ex. | Ex. | Comp. Ex. | Comp. Ex. |
| Starting materials | Pure MDI | g | 25 | 25 | 25 | 25 | | | |
| | TDI-80 | | | | | | 10 | 10 | 10 |
| | P-1 | g | 110 | | | | 300 | | |
| | PMPDA-2 | | | 110 | | | | 300 | |
| | R-1 | | | | 110 | | | | 300 |
| | PPG-2000 | | | | | 110 | | | |
| | NCO/OH | Molar ratio | 1.82 | 1.82 | 1.82 | 1.82 | 0.38 | 0.38 | 0.38 |
| Physical properties of prepolymer | NCO content | Mass% | 2.76 | 2.72 | 2.75 | 2.70 | | | |
| | OH content | meq/g | | | | | 0.57 | 0.59 | 0.57 |
| | Viscosity at 25°C | mPa·s | 97,000 | 384,000 | 125,000 | 45,000 | 3,800 | 10,200 | 4,500 |

**TABLE 6**

| | | | Ex. 6A | Ex. 7A | Comp. Ex. 5A | Comp. Ex. 6A | Comp. Ex. 7A |
|---|---|---|---|---|---|---|---|
| Base material | NCO-terminated prepolymer | | Prep. Ex. 1 | Prep. Ex. 1 | Prep. Ex. 2 | Prep. Ex. 3 | Prep. Ex. 4 |
| | NCO content | Mass% | 2.76 | 2.76 | 2.72 | 2.75 | 2.70 |
| | NCO content | meq/g | 0.66 | 0.66 | 0.65 | 0.65 | 0.64 |
| | Viscosity (25°C) | mPa·s | 97,000 | 97,000 | 384,000 | 125,000 | 45,000 |
| Curing agent | OH-terminated prepolymer | | Prep. Ex. 5 | | Prep. Ex. 6 | Prep. Ex. 7 | |
| | OH content | meq/g | 0.57 | | 0.59 | 0.57 | |
| | Viscosity (25°C) | mPa·s | 3,800 | | 10,200 | 4,500 | |
| | Polyol | | | PPG-2000 | | | PPG-2000 |
| | OH content | meq/g | | 1.0 | | | 1.0 |
| | Viscosity (25°C) | mPa·s | | 310 | | | 310 |
| | 1,4-butanediol | | Used | Used | Used | Used | Used |
| Blend ratio NCO/OH | | Molar ratio | 1.05 | 1.05 | 1.05 | 1.05 | 1.05 |
| Viscosity of mixed composition at 25°C | | mPa·s | 39,000 | 32,000 | 186,000 Viscosity is high, and it is difficult to apply | 61,000 Viscosity is high, and it is difficult to apply | 27,000 |
| Physical properties | 100% modulus | MPa | 0.42 | 0.37 | 0.65 | 0.45 | 0.25 |
| | 300% modulus | MPa | 0.50 | 0.43 | 0.94 | 0.58 | 0.32 |
| | Break strength | MPa | 1.10 | 0.72 | 1.44 | 1.12 | 0.44 |
| | Elongation at break | % | 910 | 950 | 430 | 820 | 1,020 |

**TABLE 7**

| | | Ex. 1B | Ex. 2B | Ex. 3B | Ex. 4B | Ex. 5B |
|---|---|---|---|---|---|---|
| NCO content | Mass% | 5.20 | 5.21 | 5.19 | 5.50 | 5.15 |
| Viscosity at 25°C | mPa·s | 8,700 | 9,400 | 8,900 | 6,100 | 23,500 |
| NY/NY | Peel strength (N/m) | 225 | 212 | 250 | 181 | 201 |
| | Peeled state | CF100 | CF100 | CF100 | CF100 | CF100 |
| | Peeled portion | - | - | - | - | - |
| PET/NY | Peel strength (N/m) | 160 | 140 | 154 | 63 | 112 |
| | Peeled state | AF20/CF80 | AF30/CF70 | AF20/CF80 | AF60/CF40 | AF60/CF40 |
| | Peeled portion | PET | PET | PET | PET | PET |
| Plywood/NY | Peel strength (N/m) | 300 | 265 | 430 | 160 | 173 |
| | Peeled state | AF20/CF80 | AF20/CF80 | AF20/CF80 | AF50/CF50 | AF50/CF50 |
| | Peeled portion | Ny | Ny | Ny | Ny | Ny |
| Al/NY | Peel strength (N/m) | 123 | 1.15 | 130 | 80 | 94 |
| | Peeled state | AF80/AF20 | AF80/AF20 | AF100 | AF80/AF20 | AF80/AF20 |
| | Peeled portion | Al/Ny | Al/Ny | Ny | Al/Ny | Al/Ny |

**TABLE 8**

| | | Comp. Ex. 1B | Comp. Ex. 2B | Comp. Ex. 3B | Comp. Ex. 4B |
|---|---|---|---|---|---|
| NCO content | Mass% | 5.20 | 5.19 | 4.99 | 5.07 |
| Viscosity at 25°C | mPa·s | 624,000 | 9,'700 | 4,980 | 64,300 |
| NY/NY | Peel strength (N/m) | 350 | 95 | 76 | 380 |
| | Peeled state | CF100 | CF100 | CF100 | CF100 |
| | Peeled portion | - | - | - | - |
| PET/NY | Peel strength (N/m) | 165 | 82 | 61 | 165 |
| | Peeled state | AF30/CF70 | AF20/CF80 | AF60/CF40 | AF60/CF40 |
| | Peeled portion | PET | PET | PET | PET |
| Plywood/NY | Peel strength (N/m) | 450 | 97 | 82 | 450 |
| | Peeled state | AF20/CF80 | AF90/CF10 | AF90/CF10 | AF20/CF80 |
| | Peeled portion | Ny | Ny | Ny | Ny |
| Al/NY | Peel strength (N/m) | 140 | 60 | 55 | 140 |
| | Peeled state | AF80/AF20 | AF100 | AF100 | AF80/AF20 |
| | Peeled portion | Al/Ny | Al | Al | Al/Ny |

**TABLE 9**

| | | Ex. 6B | Ex. 7B | Comp. Ex. 5B | Comp. Ex. 6B | Comp. Ex. 7B |
|---|---|---|---|---|---|---|
| Base material | NCO-terminated prepolymer | Prep. Ex. 1 | Prep. Ex. 1 | Prep. Ex. 2 | Prep. Ex. 3 | Prep. Ex. 4 |
| Curing agent | OH-terminated prepolymer | Prep. Ex. 5 | | Prep. Ex. 6 | Prep. Ex. 7 | |
| | Polyol | | PPG-2000 | | | PPG-2000 |
| | 1,4-butanediol | Used | Used | Used | Used | Used |
| Viscosity of mixed composition at 25°C | mPa·s | 39,000 | 32,000 | 186,000 | 61,000 | 27,000 |
| NY/NY | Peel strength (N/m) | 300 | 280 | 400 | 320 | 150 |
| | Peeled state | CF100 | CF100 | CF100 | CF100 | CF100 |
| | Peeled portion | | | | | |
| PET/NY | Peel strength (N/m) | 320 | 250 | 330 | 320 | 130 |
| | Peeled state | AF30/CF70 | AF20/CF80 | AF20/CF80 | AF30/CF70 | AF60/CF40 |
| | Peeled portion | PET | PET | PET | PET | PET |
| Plywood/NY | Peel strength (N/m) | 580 | 480 | 850 | 600 | 170 |
| | Peeled state | AF20/CF80 | AF20/CF80 | AF20/CF80 | AF20/CF80 | AF80/CF20 |
| | Peeled portion | Ny | Ny | Ny | Ny | Ny |
| Al/NY | Peel strength (N/m) | 230 | 210 | 290 | 250 | 120 |
| | Peeled state | AF80/AF20 | AF80/AF20 | AF80/AF20 | AF80/AF20 | AF80/AF20 |
| | Peeled portion | Al/Ny | Al/Ny | Al/Ny | Al/Ny | Al/Ny |

### INDUSTRIAL APPLICABILITY

The curable compositions in the present invention may be preferably used for adhesives, coating materials, sealing materials, resilient paving materials or water-proofing materials. Particularly, they are excellent in adhesion to wood materials, metal plates or resins and thus are suitable for adhesives for building materials, adhesives for automobile components, or adhesives for lamination of food product packaging films. Further, they are excellent also in adhesion to concrete or asphalt and thus are useful for water-proofing materials for floors, walls or roofs.

The entire disclosure of Japanese Patent Application No. 2005-142751 filed on May 16, 2005 including specification, claims and summary is incorporated herein by reference in its entirety.

## Claims

1. A one-component moisture curing type curable composition comprising an isocyanate group-terminated prepolymer obtainable by reacting a high molecular weight polyol having a hydroxyl value of from 10 to 300 mgKOH/g with a polyisocyanate compound, wherein at least a part of the high molecular weight polyol is a polyester ether polyol obtainable by ring-opening polymerization of a mixture of an alkylene oxide and a lactone monomer in the presence of an initiator.

2. A two-component curing type curable composition comprising a base material component consisting of an isocyanate group-terminated prepolymer obtainable by reacting a high molecular weight polyol having a hydroxyl value of from 10 to 300 mgKOH/g with a polyisocyanate compound, and a curing agent component consisting of at least one member selected from the group consisting of a hydroxyl group-terminated prepolymer obtainable by reacting a high molecular weight polyol having a hydroxyl value of from 10 to 300 mgKOH/g with a polyisocyanate compound, a high molecular weight polyol having a hydroxyl value of from 10 to 300 mgKOH/g, a low molecular weight polyol having a hydroxyl value exceeding 300 mgKOH/g, and a polyamine, wherein at least a part of the high molecular weight polyol is a polyester ether polyol obtainable by ring-opening polymerization of a mixture of an alkylene oxide and a lactone monomer in the presence of an initiator.

3. A two-component curing type curable composition comprising a base material component consisting of a polyisocyanate compound, and a curing agent component consisting of a hydroxyl group-terminated prepolymer obtainable by reacting a high molecular weight polyol having a hydroxyl value of from 10 to 300 mgKOH/g with a polyisocyanate compound, wherein at least a part of the high molecular weight polyol is a polyester ether polyol obtainable by ring-opening polymerization of a mixture of an alkylene oxide and a lactone monomer in the presence of an initiator.

4. The curable composition according to Claim 1, 2 or 3, wherein the ring-opening polymerization of a mixture of an alkylene oxide and a lactone monomer is carried out in the presence of a composite metal cyanide complex catalyst.

5. The curable composition according to any one of Claims 1 to 4, wherein the polyester ether polyol is obtained by ring-opening polymerization of the mixture having a molar ratio of the alkylene oxide/the lactone monomer of from 10/90 to 95/5.

6. The curable composition according to any one of Claims 1 to 5, wherein the polyester ether polyol has a ratio of the weight average molecular weight (Mw)/the number average molecular weight (Mn) of from 1.01 to 1.30, a total unsaturation degree of at most 0.07 meq/g and a hydroxyl value of from 11 to 112 mgKOH/g.

7. The curable composition according to any one of Claims 1 to 6, which is used for an adhesive, a sealing material, a resilient paving material or a water-proof material.
